# EUROPEAN PATENT SPECIFICATION

(11) **EP 3 549 403 B1**
(45) Date of publication and mention of the grant of the patent: **05.08.2020**
(21) Application number: 17812083.8
(22) Date of filing: 29.11.2017
(51) Int. Cl.: H05B 33/08, F21S 4/28

(54) **LIGHTING SYSTEM**
BELEUCHTUNGSSYSTEM
SYSTÈME D'ÉCLAIRAGE

(30) Priority: 01.12.2016 IT 201600122187
(43) Date of publication of application: 09.10.2019
(73) Proprietor: OSRAM GmbH, 80807 München (DE); OSRAM S.P.A. - SOCIETA' RIUNITE OSRAM EDISON CLERICI, 20126 Milano (IT)
(72) Inventor: VOLPATO, Luca, 31022 Preganziol (Treviso) (IT); MICHIELAN, Valerio, 30037 Gardigiano (Venezia) (IT)
(74) Representative: Meindl, Tassilo
(86) International application number: PCT/IB2017/057483
(87) International publication number: WO 2018/100502

(56) References cited:
- DE-A1-102010 003 799
- US-A1- 2014 300 282

## Description

### Description of the Related Art

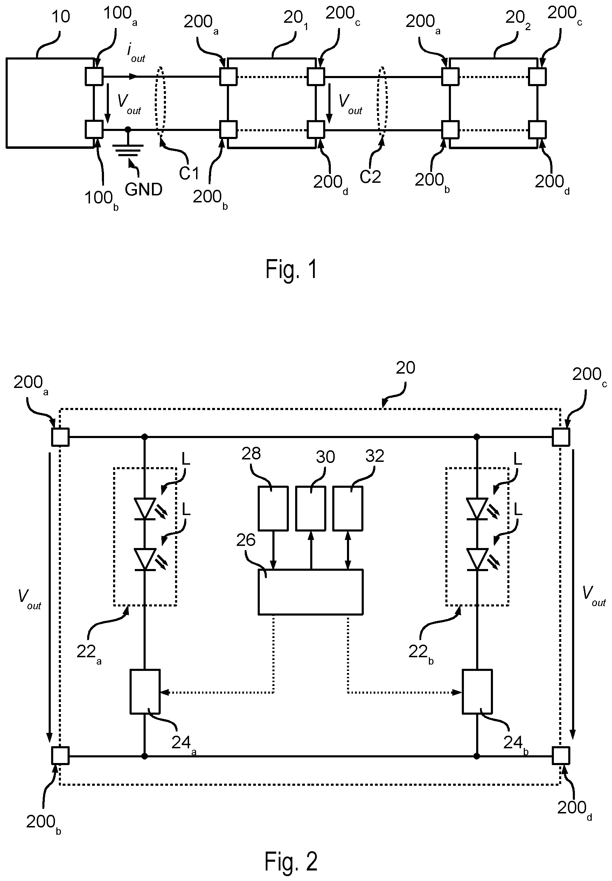

Figure 1 shows a possible lighting system including an electronic converter 10 and at least one lighting module 20. For example, Figure 1 shows two lighting modules 20₁ and 20₂.

The electronic converter 10 usually includes an AC/DC or DC/DC switched mode power supply, which receives at input a supply signal (e.g. from the mains or from a battery) and provides at output, through a power output including a positive terminal 100a and a negative terminal 100b, which constitutes a ground GND, a regulated voltage *Vₒᵤₜ* or a regulated current *iₒᵤₜ*.

Each lighting module 20 includes one or more light radiation sources including e.g. at least one LED (Light Emitting Diode) or other solid-state lighting means, such as laser diodes.

For example, Figure 2 shows an example of a lighting module 20.

Specifically, lighting module 20 includes a positive input terminal 200a and a negative input terminal 200b, for the connection to the terminals 100a and 100b of electronic converter 10. For example, lighting module 20 may be connected through a cable C1 to the electronic converter 10. Therefore, terminal 200a is connected to terminal 100a and terminal 200b is connected to terminal 100b, and thus the lighting module 20 receives the voltage *Vₒᵤₜ* and the current *iₒᵤₜ*.

In the presently considered example, lighting module 20 is a LED module including one or more LEDs L, connected between the terminals 200a and 200b. For example, module 20 may include a LED chain or string 22, wherein a plurality of LEDs L are connected in series. Moreover, the LEDs L may also be distributed along various branches connected in parallel. For example, as shown in Figure 2, module 20 may include a first LED string 22a including a first set of LEDs L connected in series, and a second LED string 22b including a second set of LEDs L connected in series.

The LED strings 22 may differ from each other for various reasons, e.g. as regards the number and the type of the LEDs, the operating temperature and other parameters, so that the voltage across one string may be different from the voltage across the other string(s). For this reason, the solution of directly connecting the strings 22 to each other in parallel is often unfeasible, because the electrical power supply is distributed in an uncontrolled fashion among the various strings.

In order to avoid this problem, the electronic converter 10 may provide a regulated voltage *Vₒᵤₜ,* such as for example 12, 24, 48 VDC.

In this case, the lighting module 20 includes a current regulator 24, connected in series with each LED string 22. For example, in Figure 2, the first LED string 22a and a first current regulator 24a are connected (e.g. directly) in series between terminals 200a and 200b, and the second LED string 22b and a second current regulator 24b are connected (e.g. directly) in series between terminals 200a and 200b.

Therefore, in the presently considered example, the strings 22a and 22b are powered by means of a common voltage (*Vₒᵤₜ*). In this case, the LED strings 22 with the respective current regulators 24 included in the various lighting modules 20 should be connected in parallel at the voltage *Vₒᵤₜ* provided by electronic converter 10. As a consequence, also the lighting modules 20 should be electrically connected in parallel to the voltage *Vₒᵤₜ*.

For example, in Figures 1 and 2, lighting module 20₁ also includes a positive output terminal 200c and a negative output terminal 200d, for the connection to a following lighting module, e.g. module 20₂. Specifically, said terminals 200c/200d are connected (e.g. directly) to terminals 200a/200b. Therefore, the voltage (*Vₒᵤₜ*) received at the terminals 200a and 200b is also applied to the terminals 200c and 200d.

As a consequence, terminals 200a and 200b of the lighting module 20₂ may be connected (directly or via a cable C2) to terminals 100a and 100b, or to terminals 200c and 200d of the lighting module 20₁, which however provide the voltage *Vₒᵤₜ*. Thus, even though modules 20₁ and 20₂ are connected in series from a mechanical point of view, the electrical connection is in parallel.

In the simplest of cases, the current regulator 24 may be a resistor or a linear current regulator, which however leads to losses. For this reason, the current regulator 24 may also be implemented via current mirrors, or with a switched mode current source typically including an inductor and an electronic switch.

The lighting modules 20 are becoming increasingly smart. Therefore, as shown in Figure 2, the lighting modules 20 may include a processing circuit 26. Generally speaking, the processing circuit 26 may be any analogue and/or digital circuit, such as a digital integrated circuit, or a microprocessor programmed via software code.

The lighting module 20 may therefore include further components interacting with the processing circuit 26, such as for instance:
- one or more sensors 28, such as e.g. a light sensor, a motion sensor (e.g. a passive infra-red (PIR) sensor), an environmental sensor (detecting e.g. temperature, moisture etc.) and/or one or more buttons for receiving a command from a user; and/or

- one or more actuators 30, such as e.g. an electric motor, e.g. for orienting the light emitted from the lighting module, and/or electronic switches; and/or
- one or more wired or wireless communication interfaces 32, such as e.g. an infrared and/or radiofrequency receiver.

Therefore, the processing circuit 26 may detect one or more parameters via sensor(s) 28. Subsequently, the processing circuit 26 may adapt the operation of the lighting module 20 as a function of these parameters, e.g.:
- for driving the current regulator 24 so as to regulate the current flowing through the respective LED string 22, i.e. to regulate the brightness of the light emitted by the light sources (so-called "dimming"), e.g. as a function of the ambient light;
- for switching the current regulator 24 on or off, i.e. for activating or deactivating the respective LED string 22 when a motion is detected or is not detected for a certain period; and/or
- for receiving control commands, e.g. for on/off switching and/or dimming, via a communication interface 32, and for driving regulator 24 correspondingly.

As an alternative or in addition, the processing circuit 26 may use the data detected by the sensors 28 also for driving the actuators 30.

As an alternative or in addition, the processing circuit 26 may store and/or send the data detected by the sensors 28 via the communication interface 32.

Generally speaking, the processing circuit 26 and optionally the other components 28, 30 and 32 may require a power supply which is not compatible with the voltage (*Vₒᵤₜ*) received via the terminals 200a and 200b. For example, a digital circuit is often powered by means of a voltage in the range between 2.5 and 5 VDC, e.g. 3.3 or 5 VDC, while voltage *Vₒᵤₜ* is typically higher than 12 VDC, e.g. 24 VDC.

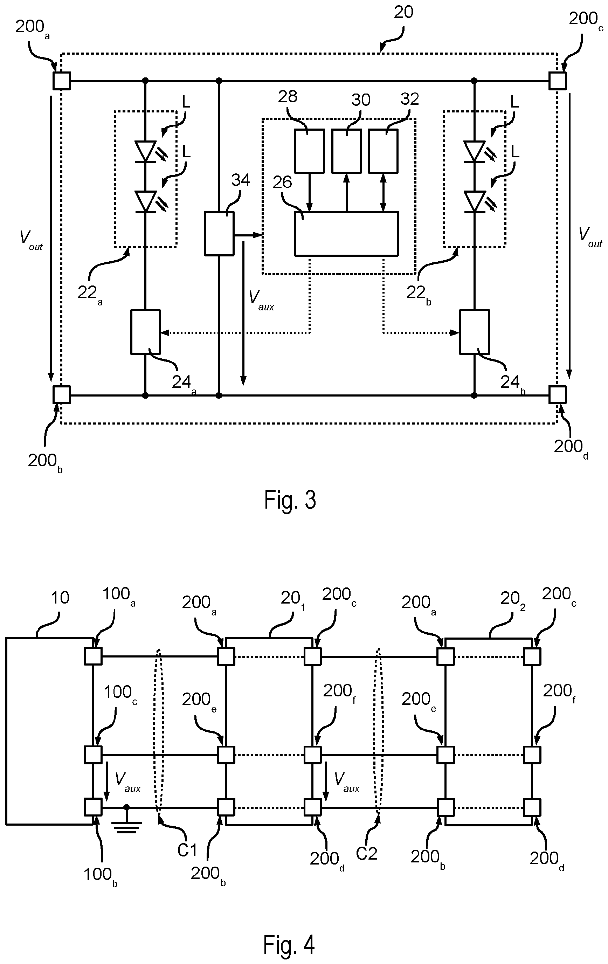

Therefore, as shown in Figure 3, the lighting module 20 may also include a voltage regulator 34.

Specifically, such voltage regulator 34 is configured to receive voltage *Vₒᵤₜ* via terminals 200a and 200b, and to generate an auxiliary supply voltage *Vₐᵤₓ* for the processing circuit 26 and optionally for the other components 28, 30 and 32.

This solution is typically employed if only one lighting module 20 is connected to the electronic converter 10. As a matter of fact, if a plurality of lighting modules 20 are connected to the electronic converter 10, this topology causes a redundancy, uselessly increasing the cost of the system, particularly of the lighting modules 20.

In order to avoid this problem, other solutions are known wherein the electronic converter 10 directly generates the auxiliary supply voltage *Vₐᵤₓ,* and applies this voltage to a further output terminal 100c. Solutions for generating an auxiliary voltage within an electronic converter 10 are well known, e.g. from document PCT/IB2016/055537, the content whereof is incorporated in the present specification by way of reference.

Specifically, as shown in Figure 4, the electronic converter 10 may apply the auxiliary voltage *Vₐᵤₓ* between terminal 100c and terminal 100b, i.e. with respect to ground GND.

In this case, the lighting modules 20 may include a further input terminal 200e for receiving the auxiliary voltage *Vₐᵤₓ,* i.e. terminal 200e is connected to terminal 100c.

Moreover, as shown in Figure 4, each lighting module 20 may include a further output terminal 200f, which is internally connected to terminal 200e, so as to allow a connection to a following lighting module 20. For example, the input terminal 200e of module 20₂ is connected to the output terminal 200f of module 20₁.

Therefore, this topology only requires an additional electronic converter, which may easily be integrated into a switched mode power supply 10. However, in this topology, the electronic converter 10 must be compatible with the lighting modules 20 because, as described in the foregoing, the supply voltage *Vₐᵤₓ* of a digital circuit may also vary from one circuit to the other: for example, some circuits may require 3.3 VDC, while other circuits require 5 VDC. Publications DE102010003799A1 and US20140300282A1 disclose lighting systems of the prior art.

### Object and Summary

The present description aims at providing solutions for generating an auxiliary supply voltage within a lighting system.

According to various embodiments, said object is achieved thanks to a lighting system having the features set forth in the claims that follow. The claims also concern a corresponding method of operating a converter.

The claims are an integral part of the technical teaching provided herein with reference to the invention.

As mentioned in the foregoing, various embodiments of the present specification concern a lighting system.

In various embodiments, the system includes an electronic converter including a positive supply terminal and a negative supply terminal, in order to provide a regulated voltage or a regulated current. The system moreover includes at least one lighting module. Specifically, in various embodiments, the lighting module includes a first positive terminal and a first negative terminal for receiving the regulated voltage or the regulated current. For example, in various embodiments, at least one lighting source is powered by means of the regulated voltage or the regulated current received via said terminals.

In various embodiments, the lighting module further includes a second positive terminal for receiving an auxiliary voltage. For example, said auxiliary voltage (which is generally different from the regulated voltage or the regulated current received via the first terminals) may be used for supplying a processing circuit of the lighting module.

In various embodiments, the system therefore includes (in addition to the electronic converter and the lighting modules) a device (which is thus external with respect to the electronic converter and the lighting modules) providing said auxiliary voltage.

Generally speaking, the electronic converter, the lighting module(s) and the device are therefore mutually connected electrically, e.g. via cables.

Specifically, in various embodiments, the device includes a first positive terminal and a first negative terminal, in order to receive the regulated voltage or the regulated current. In various embodiments, said terminals are connected to the electronic converter.

In various embodiments, the device moreover includes a second positive terminal, which is connected (internally and e.g. directly) to the first positive terminal, and a second negative terminal connected (internally and e.g. directly) to the first negative terminal. Therefore, in various embodiments, such terminals may be used in turn to power the lighting module.

In various embodiments, the device further includes a third positive terminal and a voltage regulator configured to divert energy from the first positive terminal and from the first negative terminal, and to generate the auxiliary voltage at the third positive terminal.

Generally speaking, the ground of the supply signal (i.e. the regulated voltage or the regulated current) and of the auxiliary voltage may be common or separated, e.g. by providing a further negative terminal in the device and in the lighting modules.

In various embodiments, the lighting module may also include further terminals for the connection to a following lighting module.

Therefore, in various embodiments, the device may be connected between the electronic converter and the (first) lighting module.

However, in various embodiments, the device may also be connected to the output of the last lighting module.

In various embodiments, the terminals of the electronic converter, the terminals of the lighting module and the terminals of the device may therefore be implemented with rapid connection means, such as screw or spring type terminal blocks, enabling therefore a connection via cables. Generally speaking, one or more cables may also be (pre-)soldered to the device terminals.

In various embodiments, the device terminals used for the connection to a lighting module and the respective terminals of the lighting module may be configured to implement a connector, enabling a direct connection between the device and the lighting module. Generally speaking, such device terminals may also be soldered directly to the respective terminals of the lighting module.

### Brief Description of the Annexed Drawings

Embodiments will now be described, by way of nonlimiting example only, with reference to the annexed Figures, wherein:
- Figures 1 to 4 have already been described in the foregoing,
- Figure 5 shows a first embodiment of a lighting system according to the present specification;
- Figure 6 shows an embodiment of a lighting module for the lighting system of Figure 5;
- Figure 7 shows a second embodiment of a lighting system according to the present specification;
- Figure 8 shows an embodiment of a lighting module for the lighting system of Figure 7;
- Figure 9 shows a third embodiment of a lighting system according to the present specification;
- Figure 10 shows an embodiment of a lighting module for the lighting system of Figure 9;
- Figure 11 shows a first embodiment of the electrical connection of the lighting system;
- Figure 12 shows a second embodiment of the electrical connection of the lighting system;
- Figure 13 shows a third embodiment of the electrical connection of the lighting system; and
- Figures 14, 15, 16 and 17 show further embodiments of the electrical connection of the lighting system.

### Detailed Description of Embodiments

In the following description, various specific details are given to provide a thorough understanding of the embodiments. The embodiments may be practiced without one or several specific details, or with other methods, components, materials, etc. In other instances, well-known structures, materials, or operations are not shown or described in detail in order to avoid obscuring various aspects of the embodiments.

Reference throughout this specification to "one embodiment" or "an embodiment" means that a particular feature, structure, or characteristic described in connection with the embodiment is included in at least one embodiment. Thus, the possible appearances of the phrases "in one embodiment" or "in an embodiment" in various places throughout this specification are not necessarily all referring to the same embodiment. Furthermore, particular features, structures, or characteristics may be combined in any suitable manner in one or more embodiments.

The headings provided herein are for convenience only, and therefore do not interpret the extent of protection or scope of the embodiments.

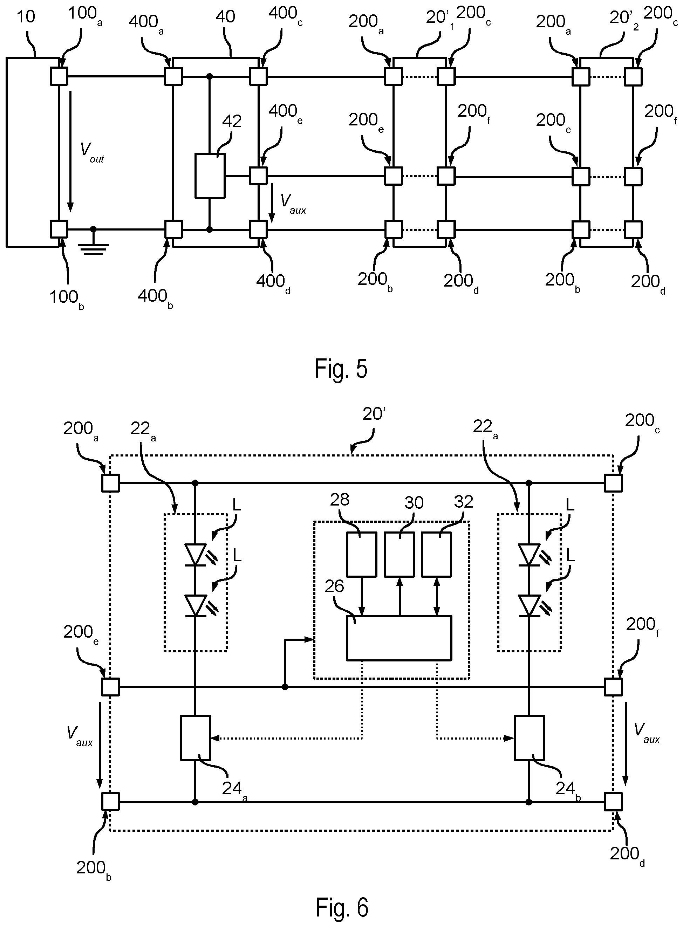

In the following Figures 5 to 17 the parts, the elements or the components that have already been described with reference to Figures 1 to 4 are denoted by the same references previously adopted in said Figures; the description of such previously described elements will not be repeated in the following in order not to overburden the present detailed description.

As mentioned in the foregoing, the present specification provides solutions for generating an auxiliary supply voltage in a lighting system.

Figure 5 shows a first embodiment of a lighting system including an electronic converter 10 and one or more lighting modules 20'.

In the presently considered embodiment, the system includes an electronic converter 10 as described with reference to Figure 1, and the related description applies in its entirety also to the system of Figure 5. Therefore, the electronic converter 10 may include an AC/DC or DC/DC switched mode power supply, receiving at input a supply signal (e.g. from the mains) and providing at output, via a power output including a positive terminal 100a and a negative terminal 100b, representing a ground GND, a regulated voltage *Vₒᵤₜ*.

As stated in the foregoing, the lighting system moreover includes one or more lighting modules 20'. For example, Figure 5 shows two lighting modules 20'₁ and 20'₂. Generally speaking, each lighting module 20' includes one or more light sources including e.g. at least one LED (Light Emitting Diode) or other solid-state lighting means, such as laser diodes.

Figure 6 shows a possible embodiment of a lighting module 20' according to the present specification. Substantially, such a lighting module 20' has the same basic topology of the lighting module 20 described with reference to Figure 2, and the related description also applies in its entirety to the lighting module 20' of Figure 6 (the differences will be described in detail in the following).

Specifically, lighting module 20' includes a positive input terminal 200a and a negative input terminal 200b, for connection to the terminals 100a and 100b of electronic converter 10. Therefore, the lighting module 20' receives, through terminals 200a and 200b, the voltage *Vₒᵤₜ*.

For example, lighting module 20' may be a LED module including one or more LEDs L connected between the terminals 200a and 200b. For example, in the presently considered embodiment, module 20' includes a first LED string 22a including a first set of LEDs L connected in series, and optionally a second LED string 22b including a second set of LEDs L connected in series.

As previously explained with reference to Figure 2, in this case lighting module 20' preferably includes a current regulator 24 connected in series with each LED string 22. For example, in the presently considered embodiment, the first LED string 22a and a first current regulator 24a are connected (e.g. directly) in series between the terminals 200a and 200b, and the second LED string 22b and a second current regulator 24b are connected (e.g. directly) in series between terminals 200a and 200b.

Therefore, in various embodiments, strings 22a and 22b are powered by means of a common voltage (*Vₒᵤₜ*), and the LED strings 22 with the respective current regulators 24 included in the various lighting modules 20' should be connected in parallel with voltage *Vₒᵤₜ* provided by the electronic converter 10. As a consequence, in various embodiments the lighting modules 20' are electrically connected in parallel to voltage *Vₒᵤₜ*.

Specifically, as already explained with reference to Figures 1 and 2, the lighting module 20' may also include a positive output terminal 200c and a negative output terminal 200d, for the connection to a following lighting module, e.g. module 20'₂. Specifically, said terminals 200c/200d are internally connected (e.g. directly) to terminals 200a/200b. Therefore, voltage (*Vₒᵤₜ*) received at terminals 200a and 200b is also applied to terminals 200c and 200d. Therefore, terminals 200a and 200b of lighting module 20₂ may be connected (directly or via a cable) to terminals 200c and 200d of lighting module 20'₁, which anyway provide the voltage *Vₒᵤₜ*. Consequently, although modules 20'₁ and 20'₂ are connected in series from a mechanical point of view, the electrical connection is in parallel.

In the embodiment shown in Figure 6, the lighting module 20' further includes a processing circuit 26 and optionally one or more sensors 28, actuators 30 and/or communication interfaces 32. The function of said modules 26, 28, 30 and 32 has already been described with reference to Figure 2, and the related description also applies to Figure 6 in its entirety.

Therefore, also processing circuit 26 and optionally the other components 28, 30 and 32 of lighting module 20' shown in Figure 6 may require a power supply which is not compatible with the voltage (*Vₒᵤₜ*) received via terminals 200a and 200b.

Specifically, in the presently considered embodiment, each lighting module 20' includes (in addition to terminals 200a and 200b, and the optional terminals 200c and 200d) a further input terminal 200e, for receiving an auxiliary voltage *Vₐᵤₓ* for powering the processing circuit 26 and optionally the other components 28, 30 and 32. For example, said auxiliary voltage *Vₐᵤₓ* may be connected to the supply pin of a microcontroller, which constitutes a processing circuit 26.

In various embodiments, each lighting module 20' may moreover include a further output terminal 200f which is internally connected (e.g. directly) to terminal 200e, so as to enable a connection to a following lighting module 20. For example, the input terminal 200e of module 20₂ is connected to the output terminal 200f of module 20₁.

In the presently considered embodiment, therefore, the electronic converter 10 does not provide the voltage *Vₐᵤₓ,* but an additional device 40 is provided which is external with respect to the electronic converter 10 and the lighting module 20, wherein said additional device 40 is configured to receive voltage *Vₒᵤₜ* and generate voltage *Vₐᵤₓ,* e.g. a voltage amounting to 3 VDC, 3.3 VDC or 5 VDC.

Specifically, as shown in Figure 5, in various embodiments said additional device 40 includes five connection terminals:
- a first (positive) input terminal 400a, for the connection to terminal 100a of the electronic converter;
- a first (negative) input terminal 400b, for the connection to terminal 100b of the electronic converter;
- a first (positive) output terminal 400c, for the connection to terminal 200a of a lighting module 20', e.g. module 20'₁;
- a second (negative) output terminal 400d, for the connection to terminal 200b of a lighting module 20', e.g. module 20'₁; and
- a third (positive) output terminal 400e, for the connection to terminal 200e of a lighting module 20', e.g. module 20'₁.

Therefore, in the presently considered embodiment, device 40 should apply the voltage *Vₒᵤₜ* between the terminals 400c and 400d, and the voltage *Vₐᵤₓ* between terminals 400e and 400d.

For this purpose, terminal 400c is connected (e.g. directly) to terminal 400a within device 40, and similarly terminal 400d is connected (e.g. directly) to terminal 400b.

Moreover, the device includes an electronic converter 42, such as a voltage regulator configured to receive the voltage *Vₒᵤₜ* via terminals 400a and 400b and generate the voltage *Vₐᵤₓ* which is applied to terminals 400e and 400b. For example, in various embodiments, the electronic converter 42 is a switched mode power supply, such as e.g. a buck converter.

Therefore, in the presently considered embodiment, device 40 is interposed between the electronic converter 10 and the first lighting module 20₁. In various embodiments, a following lighting module 20₂ may be connected to terminals 200c, 200d and 200f of the lighting module 20₁.

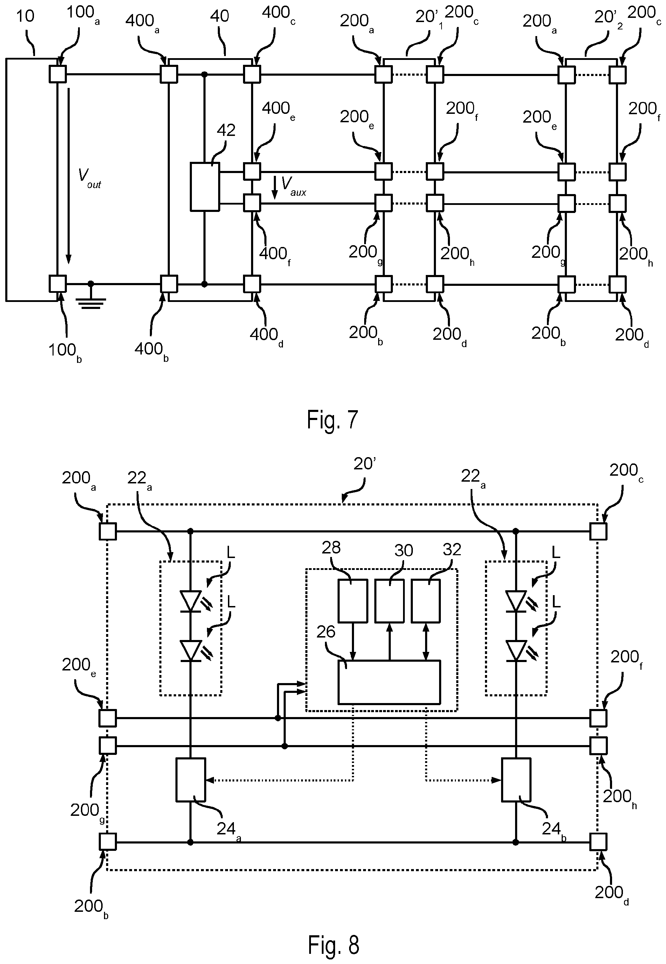

Figures 7 and 8 show a second embodiment, wherein two distinct terminals are used for the negative terminals of the voltages *Vₒᵤₜ* and *Vₐᵤₓ.*

Therefore, as shown in Figure 8, the lighting module may include a further (negative) input terminal 200g, and the voltage *(Vₐᵤₓ)* applied between the terminals 200e and 200g is used to supply the processing circuit and optionally the other components 28, 30 and 32. Also in this case, a further output terminal 200h may be provided, which is connected (e.g. directly) to terminal 200g, which may be used for the connection to a following lighting module.

Similarly, device 40 includes a further (negative) output terminal 400f. In this case, electronic converter 42 applies the voltage *Vₐᵤₓ* between terminal 400e and terminal 400f. For example, in this case it is possible to resort to an insulated electronic converter, e.g. a flyback or forward converter.

Therefore, generally speaking, the lighting modules 20' include two terminals 200a and 200b for receiving a voltage *Vₒᵤₜ* for powering lighting sources L, and two terminals 200e and 200b for receiving a second voltage *Vₐᵤₓ* for powering the processing circuit 26 and optionally the other components 28, 30 and 32. Specifically, at least the positive terminals 200a and 200e are two distinct connection terminals, while negative terminal 200b/200g may also be in common.

The solutions described in the foregoing may be used also if the electronic converter 10 provides a regulated current *iₒᵤₜ*.

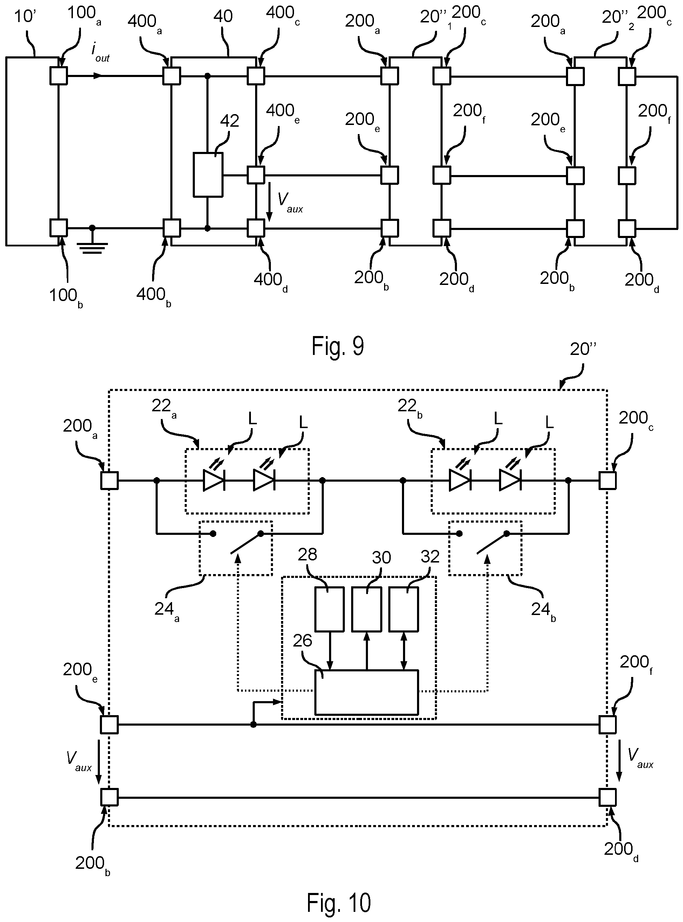

For example, Figure 9 shows an embodiment of such a lighting system, once again including an electronic converter 10' and one or more lighting modules 20", e.g. two modules 20"₁ and 20"₂. Specifically, in the presently considered embodiment, the electronic converter 10' provides a regulated current *iₒᵤₜ* through positive terminal 100a and, similarly to Figure 5, terminal 100b is a common ground. However, as an alternative two distinct grounds may be used, as shown with reference to Figure 7.

With a regulated current, the LEDs L distributed throughout the various lighting modules 20" are connected in series between terminals 100a and 100b.

Generally speaking, also in this case each lighting module 20" includes two terminals 200a and 200b. For example, if only one lighting module 20" may be connected to the electronic converter, the LEDs L of said module are connected in series between terminals 200a and 200b.

On the other hand, in the presently considered embodiment, a plurality of lighting modules 20" may be connected to converter 10'. In this case, each lighting module further includes two terminals 200c and 200d for the connection to the terminals 200a and 200b of a following lighting module 20". In this case, the terminals 200c and 200d of the last lighting module 20", e.g. module 20"₂, are (internally or externally) short-circuited, in order to close the current path. As regards such connection reference may be made to the Italian Patent Application TO2012A000028, the content whereof is incorporated herein by way of reference.

In this case, as shown in Figure 10, the LEDs L of each lighting module 20" may be connected in series between the terminals 200a and 200c (and/or between the terminals 200d and 200b, if a common ground is not used).

For example, in the presently considered embodiment, two LED strings 22a and 22b are connected in series between the terminals 200a and 200c.

In various embodiments, each LED string 22 and/or each LED L may have means 24 associated thereto for regulating the current flowing through the LED string 22 and/or the LED L. For example, in the presently considered embodiment, such means 24 include an electronic switch which enables short-circuiting LED string 22 and/or LED L. For example, said means 24 may be controlled via the processing circuit 26 described with reference to Figure 2, e.g. for switching the LEDs off and/or for performing a dimming operation, e.g. by means of Pulse Width Modulation (PWM).

Therefore, also in this case, circuit 26 and optionally the other components, such as sensors 28, actuators 30 and/or communication interfaces 32, may require an additional supply voltage *Vₐᵤₓ.*

Specifically, in the presently considered embodiment, the additional device 40 previously described with reference to Figure 5 is used for this purpose. Also in this case, terminal 400a is connected to terminal 100a of converter 10, terminal 400b is connected to terminal 100b of converter 10, terminal 400c is connected to terminal 200a of the first lighting module 20' and terminal 400d is connected to terminal 200b of the first lighting module 20.

Specifically, the presently considered embodiment is based on the fact that a voltage will be generated between terminals 100a and 100b when the current *iₒᵤₜ* flows through the LEDs L of the lighting modules 20". Therefore, said voltage may be used again for generating the auxiliary voltage *Vₐᵤₓ.* For example, in the presently considered embodiment, said voltage *Vₐᵤₓ* is applied between terminals 400e and 400d of device 40. Therefore, similarly to the embodiment shown in Figures 5 and 6, each lighting module 20" includes a terminal 200e for receiving said voltage *Vₐᵤₓ.* Each lighting module 20" may further include a terminal 200f (internally connected to terminal 200e), which may be used for providing voltage *Vₐᵤₓ* to a following lighting module 20".

As a consequence, irrespective of the driving adopted (voltage or current), the system includes an additional device 40 generating the auxiliary voltage *V_{aux,}* by diverting energy from the power supply lines (100a and 100b) used for powering the LEDs L included in the various lighting modules 20 (20' and 20") which are connected to the electronic converter 10 (10').

In the following there will be described possible connections of the various components (10, 20 and 40) of the lighting system.

Specifically, in the following Figures, the positive supply terminals (i.e. terminals 100a, 200a, 200c, 400a and 400c) are indicated with "+", and the negative supply terminals (i.e. terminals 100b, 200b, 200d, 400b and 400d) are indicated with "-". On the other hand, the positive terminals used for the auxiliary voltage *Vₐᵤₓ* (i. e. terminals 200e, 200f and 400e) do not show any additional reference.

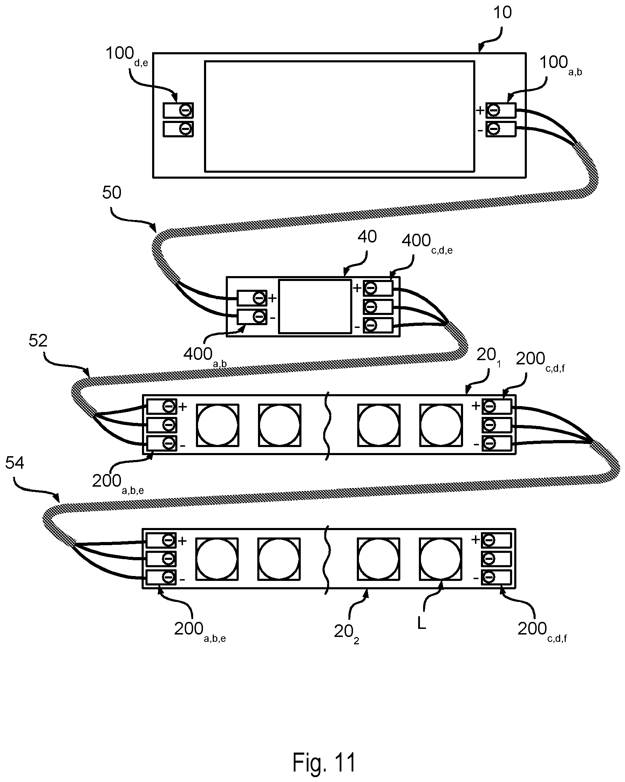

For example, Figure 11 shows an embodiment wherein the electronic converter 10, the device 40, the lighting module 20₁ and optionally one or more further lighting modules 20₂ are connected with each other via cables.

For example, in the presently considered embodiment, the terminals 100a and 100b of the electronic converter 10 are implemented with rapid connection means, e.g. a screw or spring terminal block having e.g. two contacts. As previously stated, the electronic converter 10 further includes two terminals 100d and 100e for the connection to a power source, e.g. the mains or a battery. For example, also these terminals 100d and 100e may be implemented via a terminal block.

Similarly, also the terminals 400a, 400b, 400c, 400d and 400e of device 40, and the terminals 200a, 420b, 200c, 200d, 200e and 200f of the lighting modules 20 (20' and 20") may be implemented with rapid connection means, e.g. screw or spring type terminal blocks having e.g. two or three contacts, as shown in the Figures.

Therefore, in the presently considered embodiment, device 40 (specifically terminals 400a and 400b) is connected to the electronic converter 10 (specifically to terminals 100a and 100b) via a first electrical cable 50, having e.g. two wires. Moreover, the first lighting module 20₁ (specifically terminals 200a, 200b and 200e) is connected to device 40 (specifically to terminals 400c, 400d and 400e) via a second electrical cable 52, having e.g. three wires.

Similarly, a second lighting module 20₂ (specifically terminals 200a, 200b and 200e) may be connected to the first lighting module 20₁ (specifically to terminals 200c, 200d and 200f) via a third electrical cable 54, having e.g. three wires.

Generally speaking, instead of using terminal blocks for device 40, the first cable 50 and/or the second cable 52 may also be soldered to device 40.

Therefore, the presently considered embodiment corresponds to the topology shown with reference to Figures 5 and 9, and may therefore be used both for a voltage driving and for a current driving. However, with an increase in the number of connections of the terminal blocks of the device 40 and of the lighting modules 20, also the topology shown in Figure 7, having two distinct grounds, might be used.

Specifically, in the previously considered embodiments, device 40 was always interposed between the electronic converter 10 and the first lighting module 20₁. However, this is not mandatory, especially if the provided electronic converter 10 supplies a regulated voltage *Vₒᵤₜ*. As a matter of fact, in such a case, the terminal 100a of electronic converter 10 and the terminals 200a and 200c of the lighting modules 20 have the same voltage *Vₒᵤₜ*. Similarly, the terminals 200e and 200f of the lighting modules 20 have the same voltage *Vₐᵤₓ.* Therefore, the device 40 may be arranged at any location.

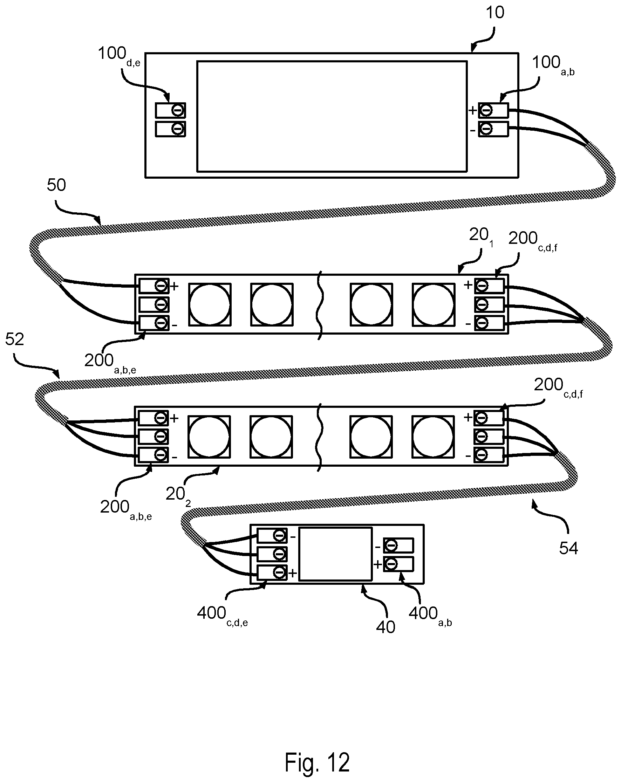

For example, Figure 12 shows an embodiment wherein device 40 is connected to the last lighting module 20₂.

Specifically, in the presently considered embodiment, the first lighting module 20₁ (specifically terminals 200a and 200b) is connected to the electronic converter 10 (specifically to terminals 100a and 100b) via a first electrical cable 50, having e.g. two wires. Therefore, the terminal 200e of the first lighting module 20₁ is disconnected.

A second lighting module 20₂ (specifically terminals 200a, 200b and 200e) may be connected to the first lighting module 20₁ (specifically to terminals 200c, 200d and 200f) via a second electrical cable 52, having e.g. three wires.

Finally, device 40 (specifically terminals 400c, 400d and 400e) is connected to the last lighting module, e.g. lighting module 20₂, (specifically to terminals 200c, 200d and 200f) via a third electrical cable 54, having e.g. three wires. Therefore, terminals 400a and 400b of device 40 are disconnected.

Thus, device 40 receives, via the terminals 400c and 400d (which are internally connected to the terminals 400a and 400b) the voltage *Vₒᵤₜ* and generates the voltage *Vₐᵤₓ* which is applied to terminal 400e, and consequently to terminal 200f of the last lighting module, which in turn provides, via the internal connection thereof, such voltage *Vₐᵤₓ* through terminal 200e to the other lighting modules 20.

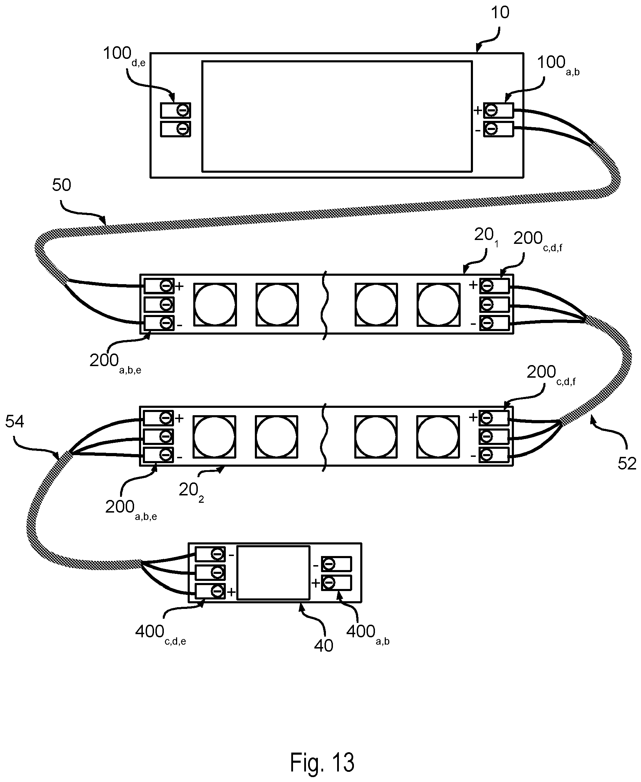

Figure 13 shows a further embodiment, wherein device 40 is connected to the last lighting module 20₂.

Specifically, in the presently considered embodiment, the first lighting module 20₁ (specifically terminals 200a and 200b) is connected, as in Figure 12, to the electronic converter 10 (specifically to terminals 100a and 100b) via a first electrical cable 50, having e.g. two wires. Therefore, the terminal 200e of the first lighting module 20₁ is disconnected.

However, in this case, a second lighting module 20₂ is connected to the first lighting module 20₁ not via terminals 200a, 200b and 200e, but via terminals 200c, 200d and 200f. Therefore, in the presently considered embodiment, terminals 200c, 200d and 200f of lighting module 20₂ are connected to terminals 200c, 200d and 200f of lighting module 20₁ via a second electrical cable 52, having e.g. three wires.

Finally, device 40 (specifically terminals 400c, 400d and 400e) is connected to the last lighting module, e.g. lighting module 20₂, (specifically to terminals 200a, 200b and 200e) via a third electrical cable 54, having e.g. three wires. Therefore, terminals 400a and 400b of device 40 are disconnected.

As a consequence, with a voltage driving, terminals 200c, 200d and 200f and terminals 200a, 200b and 200e of the lighting modules 20 may be inverted, because terminals 200c, 200d and 200f are internally connected to terminals 200a, 200b and 200e.

Generally speaking, cable 54 shown in Figures 12 and 13 may also be soldered to device 40.

In various embodiments, the terminal block which includes terminals 400a/400b and/or the terminal block which includes terminals 400c/400d/400e may be replaced with a connector having the same number of pins, i.e. two pins for terminals 400a/400b and three pins for terminals 400c/400d/400e. In this way, said pins may be inserted directly into the terminal block of the electronic converter 10 or of the lighting module 20.

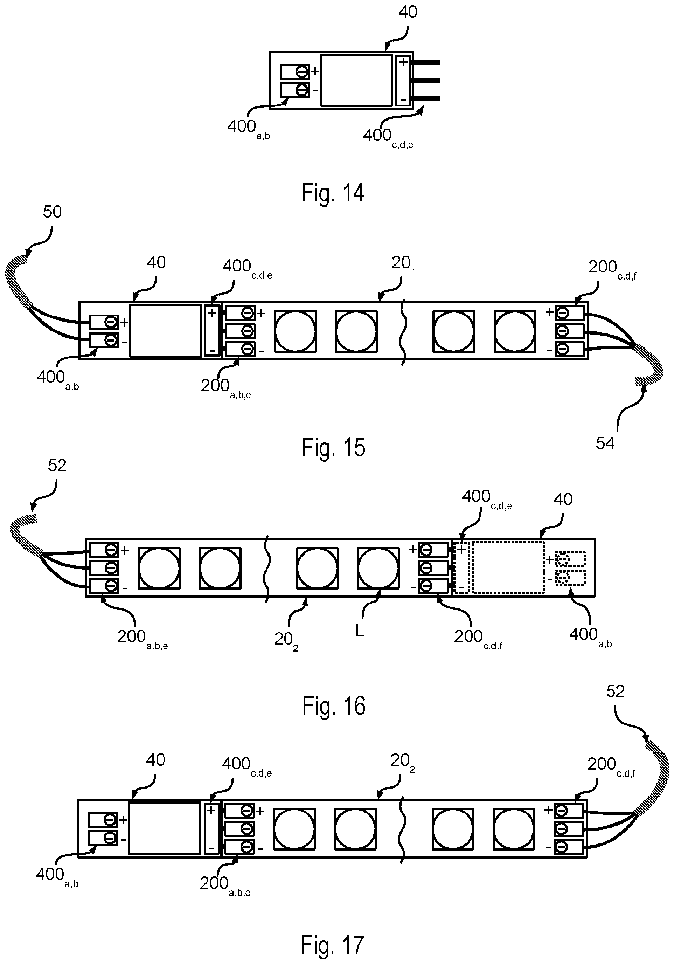

For example, Figure 14 shows an embodiment of device 40 wherein terminals 400c/400d/400e are implemented by three pins.

In this scenario, Figure 15 substantially shows the topology of Figure 11, wherein the second cable 52 has been replaced with a direct connection between the pins of terminals 400c/400d/400e and the terminal block including terminals 200a/200b/200e of the first lighting module 20₁.

Similarly, Figure 16 substantially shows the topology of Figure 12, wherein the third cable 54 has been replaced with a direct connection between the pins of terminals 400c/400d/400e and the terminal block including terminals 200c/200d/200f of the last lighting module, e.g. module 20₂. In this case, device 40 simply needs to be turned so that positive terminal 400c is connected to the positive terminal 200c of the lighting module.

Finally, Figure 17 substantially shows the topology of Figure 13, wherein the third cable 54 has been replaced with a direct connection between the pins of terminals 400c/400d/400e and the terminal block including terminals 200a/200d/200e of the last lighting module, e.g. module 20₂.

Generally speaking, also any other kind of rapid connection means, e.g. combinations of plugs and sockets, may be employed instead of pins and terminal block. Moreover, terminals 400c/400d/400e may be soldered directly to terminals 200a/200b/200e (or 200c/200d/200e) of a lighting module 20, thereby substantially implementing a terminal block, or generally a connector including the voltage regulator 42 therein.

Therefore, in the presently considered embodiments, the electronic converter 42 of device 40 generating the auxiliary voltage *Vₐᵤₓ* is external with respect to the electronic converter 10 and to the lighting modules 20. Therefore, these components may be developed independently, particularly as regards their magnetic interferences. For example, in this way the number of LEDs and the shape of the lighting modules 20 may easily be varied, because there is no need to design a new electronic converter (specifically a switched mode power supply) on the same printed circuit board of the lighting module 20 (e.g. converter 34 shown in Figure 3).

Moreover, the cost of such a solution is similar to the topology shown in Figure 4. However, thanks to the flexibility of the mounting position of device 40, the installation is much simpler.

## Claims

1. A Lighting system comprising:
- an electronic converter (10; 10') comprising a positive (100a) and a negative (100b) power supply terminal for providing a regulated voltage (*Vₒᵤₜ*) or a regulated current (*iₒᵤₜ*);
- a lighting module (20'; 20") comprising:
a) a first positive terminal (200a; 200c) and a first negative terminal (200b; 200d) for receiving said regulated voltage (*Vₒᵤₜ*) or said regulated current (*iₒᵤₜ*),
b) at least one light source (L) configured to be powered by means of said regulated voltage (*Vₒᵤₜ*) or said regulated current (*iₒᵤₜ*) received via said first positive terminal (200a; 200c) and said first negative terminal (200b; 200d) of said lighting module (20'; 20"),
c) a second positive terminal (200e; 200f) for receiving an auxiliary voltage (*Vₐᵤₓ*)*,* and
d) a processing circuit (26) configured to be powered by means of said auxiliary voltage (*Vₐᵤₓ*); **characterized in that** said system comprises:
- a device (40) external with respect to said electronic converter (10; 10') and said lighting module (20'; 20"), wherein said device comprises:
a) a first positive terminal (400a; 400c) and a first negative terminal (400b; 400d) for receiving said regulated voltage (*Vₒᵤₜ*) or said regulated current (*iₒᵤₜ*),
b) a second positive terminal (400c; 400a) connected to said first positive terminal (400a; 400c) of said device (40), and a second negative terminal (400d; 400b) connected to said first negative terminal (400b; 400d) of said device (40),
c) a third positive terminal (400e), and
d) a voltage regulator (42) configured to divert energy from said first positive terminal (400a; 400c) and said first negative terminal (400b; 400d) of said device (40) and generate said auxiliary voltage (*Vₐᵤₓ*) at said third positive terminal (400e).

2. The lighting system according to Claim 1, wherein:
- said lighting module (20'; 20") comprises a second negative terminal (200g; 200h), and wherein said processing circuit (26) is configured to be powered by means of the auxiliary voltage (*Vₐᵤₓ*) applied between said second positive terminal (200e; 200f) and said second negative terminal (200g; 200h) of said lighting module (20'; 20"); and
- said device (40) comprises a third negative terminal (400f), and wherein said voltage regulator (42) is configured to generate said auxiliary voltage (*Vₐᵤₓ*) between said third positive terminal (400e) and said third negative terminal (400f) of said device (40) .

3. The lighting system according to Claim 1, wherein:
- said processing circuit (26) is configured to be powered by means of the auxiliary voltage (*Vₐᵤₓ*) applied between said second positive terminal (200e; 200f) and said first negative terminal (200b; 200d) of said lighting module (20'; 20"); and
- said voltage regulator (42) is configured to generate said auxiliary voltage (*Vₐᵤₓ*) between said third positive terminal (400e) and said second negative terminal (400d; 400b) of said device (40).

4. The lighting system according to any of the previous claims, wherein said voltage regulator (42) is a switched mode powers supply, such as a buck, flyback or forward converter.

5. The lighting system according to any of the previous claims, wherein said voltage regulator (42) is configured to generate an auxiliary voltage (*Vₐᵤₓ*) with 3 VDC, 3.3 VDC or 5 VDC.

6. The lighting system according to any of the previous claims, wherein said lighting module (20'; 20") comprises a third positive terminal (200c; 200a), a third negative terminal (200d; 200b), and a fourth positive terminal (200f; 200e) connected to said second positive terminal (200e; 200f) of said lighting module (20'; 20").

7. The lighting system according to Claim 6, wherein:
- said electronic converter (10) provides a regulated voltage (*Vₒᵤₜ*), wherein said third positive terminal (200c; 200a) is connected to said first positive terminal (200a; 200c) of said lighting module (20'; 20"), said third negative terminal (200d; 200b) is connected to said first negative terminal (200b; 200d) of said lighting module (20'; 20"), and wherein said lighting module (20') comprises at least one LED string (22) connected between said first positive terminal (200a; 200c) and said first negative terminal (200b; 200d) of said lighting module (20'); or
- said electronic converter (10') provides a regulated current (*iₒᵤₜ*), and wherein said lighting module (20') comprises at least one LED string (22) connected between said first positive terminal (200a; 200c) and said third positive terminal (200c; 200a) of said lighting module (20').

8. The lighting system according to Claim 7, wherein each LED string (22) has associated means (24) configured to regulate the current flowing through the respective LED string (22), wherein said processing circuit (26) is configured to control the operation of said means (24) configured to regulate the current flowing through the respective LED string (22).

9. The lighting system according to any of the previous claims, wherein:
- said first positive terminal (400a; 400c) and said first negative terminal (400b; 400d) of said device (40) are connected to said positive terminal (100a) and said negative terminal (100b) of said electronic converter (10; 10'), respectively,
- said second positive terminal (400c; 400a) and said second negative terminal (400d; 400b) of said device (40) are connected to said first positive terminal (200a; 200c) and said first negative terminal (200b; 200d) of said lighting module (20'; 20"), respectively, and
- said third positive terminal (400e) of said device (40) is connected to said second positive terminal (200e; 200f) of said lighting module (20'; 20").

10. The lighting system according to any of the previous claims from 6 to 8, wherein:
- said first positive terminal (200a; 200c) and said first negative terminal (200b; 200d) of said lighting module (20') are connected to said positive terminal (100a) and said negative terminal (100b) of said electronic converter (10), respectively,
- said second positive terminal (400c; 400a) and said second negative terminal (400d; 400b) of said device (40) are connected to said third positive terminal (200c; 200a) and said third negative terminal (200d; 200b) of said lighting module (20'), respectively, and
- said third positive terminal (400e) of said device (40) is connected to said fourth positive terminal (200f; 200e) of said a lighting module (20').

11. The lighting system according to any of the previous claims, wherein the terminals (100a, 100b) of said electronic converter (10; 10'), the terminals (200a, 200b, 200c, 200d, 200e, 200f) of said lighting module (20'; 20") and the terminals (400a, 400b, 400c, 400d, 400e) of said device (40) are implemented with rapid connection means, such as screw or spring type terminal blocks, such that said electronic converter (10; 10'), said lighting module (20'; 20") and said device (40) may be connected among each other by means of cables (50, 52, 54).

12. The lighting system according to any of the previous claims, wherein a first cable (52; 54) is soldered to said second positive terminal (400c), said second negative terminal (400d) and said third positive terminal (400e) of said device (40), and/or a second cable (50) is soldered to said first positive terminal (400a) and said first negative terminal (400b).

13. The lighting system according to any of the previous claims, wherein said second positive terminal (400c), said second negative terminal (400d) and said third positive terminal (400e) of said device (40) and said first positive terminal (200a; 200c), said first negative terminal (200b; 200d) and said second positive terminal (200e; 200f) of said lighting module (20'; 20") are configured to implement a connector, which permits a direct connection between said second positive terminal (400c), said second negative terminal (400d) and said third positive terminal (400e) of said device (40) and said first positive terminal (200a; 200c), said first negative terminal (200b; 200d) and said second positive terminal (200e; 200f) of said lighting module (20'; 20"), respectively.

## Patentansprüche

1. Beleuchtungssystem umfassend:
- einen elektronischen Wandler (10; 10') umfassend einen positiven (100a) und einen negativen (100b) Stromversorgungsanschluss zum Bereitstellen einer geregelten Spannung (Vₒᵤₜ) oder eines geregelten Stroms (iₒᵤₜ);
- ein Beleuchtungsmodul (20'; 20"), umfassend:
a) einen ersten positiven Anschluss (200a; 200c) und einen ersten negativen Anschluss (200b; 200d) zum Empfangen der geregelten Spannung (Vₒᵤₜ) oder des geregelten Stroms (iₒᵤₜ),
b) mindestens eine Lichtquelle (L), die konfiguriert ist, um mittels der geregelten Spannung (Vₒᵤₜ) oder dem geregelten Strom (iₒᵤₜ) versorgt zu werden, die bzw. der über den ersten positiven Anschluss (200a; 200c) und den ersten negativen Anschluss (200b; 200d) des Beleuchtungsmoduls (20'; 20") empfangen wird,
c) einen zweiten positiven Anschluss (200e; 200f) zum Empfangen einer Hilfsspannung (Vₐᵤₓ), und
d) eine Verarbeitungsschaltung (26), die konfiguriert ist, um mittels der Hilfsspannung (Vₐᵤₓ) versorgt zu werden;
**dadurch gekennzeichnet, dass** das System umfasst:
- eine Vorrichtung (40), die in Bezug auf den elektronischen Wandler (10; 10') und das Beleuchtungsmodul (20'; 20") extern ist, wobei die Vorrichtung umfasst:
a) einen ersten positiven Anschluss (400a; 400c) und einen ersten negativen Anschluss (400b; 400d) zum Empfangen der geregelten Spannung (Vₒᵤₜ) oder des geregelten Stroms (iₒᵤₜ),
b) einen zweiten positiven Anschluss (400c; 400a), der mit dem ersten positiven Anschluss (400a; 400c) der Vorrichtung (40) verbunden ist, und einen zweiten negativen Anschluss (400d; 400b), der mit dem ersten negativen Anschluss (400b; 400d) der Vorrichtung (40) verbunden ist,
c) einen dritten positiven Anschluss (400e), und
d) einen Spannungsregler (42), der konfiguriert ist, um Energie von dem ersten positiven Anschluss (400a; 400c) und dem ersten negativen Anschluss (400b; 400d) der Vorrichtung (40) abzuleiten und die Hilfsspannung (Vₐᵤₓ) an dem dritten positiven Anschluss (400e) zu erzeugen.

2. Beleuchtungssystem nach Anspruch 1, wobei:
- das Beleuchtungsmodul (20'; 20") einen zweiten negativen Anschluss (200g; 200h) umfasst, und wobei die Verarbeitungsschaltung (26) konfiguriert ist, um mittels der Hilfsspannung (Vₐᵤₓ) versorgt zu werden, die zwischen dem zweiten positiven Anschluss (200e; 200f) und dem zweiten negativen Anschluss (200g; 200h) des Beleuchtungsmoduls (20'; 20") angelegt wird; und
- die Vorrichtung (40) einen dritten negativen Anschluss (400f) umfasst, und wobei der Spannungsregler (42) konfiguriert ist, um die Hilfsspannung (Vₐᵤₓ) zwischen dem dritten positiven Anschluss (400e) und dem dritten negativen Anschluss (400f) der Vorrichtung (40) zu erzeugen.

3. Beleuchtungssystem nach Anspruch 1, wobei:
- die Verarbeitungsschaltung (26) konfiguriert ist, um mittels der Hilfsspannung (Vₐᵤₓ) versorgt zu werden, die zwischen dem zweiten positiven Anschluss (200e; 200f) und dem ersten negativen Anschluss (200b; 200d) des Beleuchtungsmoduls (20'; 20") angelegt wird; und
- der Spannungsregler (42) konfiguriert ist, um die Hilfsspannung (Vₐᵤₓ) zwischen dem dritten positiven Anschluss (400e) und dem zweiten negativen Anschluss (400d; 400b) der Vorrichtung (40) zu erzeugen.

4. Beleuchtungssystem nach irgendeinem der vorhergehenden Ansprüche, wobei der Spannungsregler (42) ein Schaltnetzteil, wie z.B. ein Abwärts-, Sperr- oder Durchflusswandler, ist.

5. Beleuchtungssystem nach irgendeinem der vorhergehenden Ansprüche, wobei der Spannungsregler (42) konfiguriert ist, um eine Hilfsspannung (Vₐᵤₓ) mit 3 VDC, 3,3 VDC oder 5 VDC zu erzeugen.

6. Beleuchtungssystem nach irgendeinem der vorhergehenden Ansprüche, wobei das Beleuchtungsmodul (20'; 20") einen dritten positiven Anschluss (200C; 200a), einen dritten negativen Anschluss (200d; 200b) und einen vierten positiven Anschluss (200f; 200e) umfasst, der mit dem zweiten positiven Anschluss (200e; 200f) des Beleuchtungsmoduls (20'; 20") verbunden ist.

7. Beleuchtungssystem nach Anspruch 6, wobei:
- der elektronische Wandler (10) eine geregelte Spannung (Vₒᵤₜ) bereitstellt, wobei der dritte positive Anschluss (200c; 200a) mit dem ersten positiven Anschluss (200a; 200c) des Beleuchtungsmoduls (20'; 20") verbunden ist, der dritte negative Anschluss (200d; 200b) mit dem ersten negativen Anschluss (200b; 200d) des Beleuchtungsmoduls (20'; 20") verbunden ist, und wobei das Beleuchtungsmodul (20') mindestens eine LED-Kette (22) umfasst, die zwischen dem ersten positiven Anschluss (200a; 200c) und dem ersten negativen Anschluss (200b; 200d) des Beleuchtungsmoduls (20') verbunden ist; oder
- der elektronische Wandler (10') einen geregelten Strom (iₒᵤₜ) bereitstellt, und wobei das Beleuchtungsmodul (20') mindestens eine LED-Kette (22) umfasst, die zwischen dem ersten positiven Anschluss (200a; 200c) und dem dritten positiven Anschluss (200c; 200a) des Beleuchtungsmoduls (20') verbunden ist.

8. Beleuchtungssystem nach Anspruch 7, wobei jede LED-Kette (22) ein zugehöriges Mittel (24) aufweist, das konfiguriert ist, um den durch die jeweilige LED-Kette (22) fließenden Strom zu regulieren, wobei die Verarbeitungsschaltung (26) konfiguriert ist, um den Betrieb des Mittels (24) zu steuern, das konfiguriert ist, um den durch die jeweilige LED-Kette (22) fließenden Strom zu regulieren.

9. Beleuchtungssystem nach irgendeinem der vorhergehenden Ansprüche, wobei:
- der erste positive Anschluss (400a; 400c) und der erste negative Anschluss (400b; 400d) der Vorrichtung (40) jeweils mit dem positiven Anschluss (100a) und dem negativen Anschluss (100b) des elektronischen Wandlers (10; 10') verbunden sind,
- der zweite positive Anschluss (400c; 400a) und der zweite negative Anschluss (400d; 400b) der Vorrichtung (40) jeweils mit dem ersten positiven Anschluss (200a; 200c) und dem ersten negativen Anschluss (200b; 200d) des Beleuchtungsmoduls (20'; 20") verbunden sind, und
- der dritte positive Anschluss (400e) der Vorrichtung (40) mit dem zweiten positiven Anschluss (200e; 200f) des Beleuchtungsmoduls (20'; 20") verbunden ist.

10. Beleuchtungssystem nach irgendeinem der vorhergehenden Ansprüche 6 bis 8, wobei:
- der erste positive Anschluss (200a; 200c) und der erste negative Anschluss (200b; 200d) des Beleuchtungsmoduls (20') jeweils mit dem positiven Anschluss (100a) und dem negativen Anschluss (100b) des elektronischen Wandlers (10) verbunden sind,
- der zweite positive Anschluss (400c; 400a) und der zweite negative Anschluss (400d; 400b) der Vorrichtung (40) jeweils mit dem dritten positiven Anschluss (200c; 200a) und dem dritten negativen Anschluss (200d; 200b) des Beleuchtungsmoduls (20') verbunden sind, und
- der dritte positive Anschluss (400e) der Vorrichtung (40) mit dem vierten positiven Anschluss (200f; 200e) des Beleuchtungsmoduls (20') verbunden ist.

11. Beleuchtungssystem nach irgendeinem der vorhergehenden Ansprüche, wobei die Anschlüsse (100a, 100b) des elektronischen Wandlers (10; 10'), die Anschlüsse (200a, 200b, 200c, 200d, 200e, 200f) des Beleuchtungsmoduls (20'; 20") und die Anschlüsse (400a, 400b, 400c, 400d, 400e) der Vorrichtung (40) mit Schnellverbindungsmitteln, wie schraubartigen Anschlussblöcken oder federartigen Anschlussblöcken, implementiert sind, so dass der elektronische Wandler (10; 10'), das Beleuchtungsmodul (20'; 20") und die Vorrichtung (40) miteinander mittels Kabeln (50, 52, 54) verbunden werden können.

12. Beleuchtungssystem nach irgendeinem der vorhergehenden Ansprüche, wobei ein erstes Kabel (52; 54) an den zweiten positiven Anschluss (400c), den zweiten negativen Anschluss (400d) und den dritten positiven Anschluss (400e) der Vorrichtung (40) gelötet ist und/oder ein zweites Kabel (50) an den ersten positiven Anschluss (400a) und den ersten negativen Anschluss (400b) gelötet ist.

13. Beleuchtungssystem nach irgendeinem der vorhergehenden Ansprüche, wobei der zweite positive Anschluss (400c), der zweite negative Anschluss (400d) und der dritte positive Anschluss (400e) der Vorrichtung (40) und der erste positive Anschluss (200a; 200c), der erste negative Anschluss (200b; 200d) und der zweite positive Anschluss (200e; 200f) des Beleuchtungsmoduls (20'; 20") konfiguriert sind, um einen Verbinder zu implementieren, der eine direkte Verbindung zwischen dem zweiten positiven Anschluss (400c), dem zweiten negativen Anschluss (400d) und dem dritten positiven Anschluss (400e) der Vorrichtung (40) bzw. dem ersten positiven Anschluss (200a; 200c), dem ersten negativen Anschluss (200b; 200d) und dem zweiten positiven Anschluss (200e; 200f) des Beleuchtungsmoduls (20'; 20") ermöglicht.

## Revendications

1. Un système d'éclairage comprenant :
- un convertisseur électronique (10 ; 10') comprenant une borne positive (100a) et une borne négative (100b) d'alimentation de puissance pour délivrer une tension régulée (*Vₒᵤₜ*) ou un courant régulé (*iₒᵤₜ*) ;
- un module d'éclairage (20' ; 20") comprenant :
a) une première borne positive (200a ; 200c) et une première borne négative (200b ; 200d) destinées à recevoir ladite tension régulée (*Vₒᵤₜ*) ou ledit courant régulé (*iₒᵤₜ*),
b) au moins une source lumineuse (L) configurée pour être alimentée au moyen de ladite tension régulée (*Vₒᵤₜ*) ou dudit courant régulé (*iₒᵤₜ*) reçus par l'intermédiaire de ladite première borne positive (200a ; 200c) et de ladite première borne négative (200b ; 200d) dudit module d'éclairage (20' ; 20"),
c) une seconde borne positive (200e ; 200f) destinée à recevoir une tension auxiliaire (*Vₐᵤₓ*)*,* et
d) un circuit de traitement (26) configuré pour être alimenté au moyen de ladite tension auxiliaire (*Vₐᵤₓ*) ;
**caractérisé en ce que** ledit système comprend :
- un dispositif (40) externe par rapport audit convertisseur électronique (10 ; 10') et audit module d'éclairage (20' ; 20"), ledit dispositif comprenant :
a) une première borne positive (400a ; 400c) et une première borne négative (400b ; 400d) destinées à recevoir ladite tension régulée (*Vₒᵤₜ*) ou ledit courant régulé (*iₒᵤₜ*),
b) une seconde borne positive (400c ; 400a) reliée à ladite première borne positive (400a ; 400c) dudit dispositif (40), et une seconde borne négative (400d ; 400b) reliée à ladite première borne négative (400b ; 400d) dudit dispositif (40),
c) une troisième borne positive (400e), et
d) un régulateur de tension (42) configuré pour détourner de l'énergie depuis ladite première borne positive (400a ; 400c) et ladite première borne négative (400b ; 400d) dudit dispositif (40) et générer ladite tension auxiliaire *(Vₐᵤₓ)* sur ladite troisième borne positive (400e).

2. Le système d'éclairage selon la revendication 1, dans lequel :
- ledit module d'éclairage (20' ; 20") comprend une seconde borne négative (200g ; 200h), et dans lequel ledit circuit de traitement (26) est configuré pour être alimenté au moyen de la tension auxiliaire (*Vₐᵤₓ*) appliquée entre ladite seconde borne positive (200e ; 200f) et ladite seconde borne négative (200g ; 200h) dudit module d'éclairage (20' ; 20") ; et
- ledit dispositif (40) comprend une troisième borne négative (400f), et dans lequel ledit régulateur de tension (42) est configuré pour générer ladite tension auxiliaire *(Vₐᵤₓ)* entre ladite troisième borne positive (400e) et ladite troisième borne négative (400f) dudit dispositif (40).

3. Le système d'éclairage selon la revendication 1, dans lequel :
- ledit circuit de traitement (26) est configuré pour être alimenté au moyen de la tension auxiliaire (*Vₐᵤₓ*) appliquée entre ladite seconde borne positive (200e; 200f) et ladite première borne négative (200b ; 200d) dudit module d'éclairage (20' ; 20") ; et
- ledit régulateur de tension (42) est configuré pour générer ladite tension auxiliaire (*Vₐᵤₓ*) entre ladite troisième borne positive (400e) et ladite seconde borne négative (400d ; 400b) dudit dispositif (40).

4. Le système d'éclairage selon l'une des revendications précédentes, dans lequel ledit régulateur de tension (42) est une alimentation de puissance en mode à commutation, telle qu'un convertisseur buck, flyback ou forward.

5. Le système d'éclairage selon l'une des revendications précédentes, dans lequel ledit régulateur de tension (42) est configuré pour générer une tension auxiliaire (*Vₐᵤₓ*) à 3 VCC, 3,3 VCC ou 5 VCC.

6. Le système d'éclairage selon l'une des revendications précédentes, dans lequel ledit module d'éclairage (20' ; 20") comprend une troisième borne positive (200c ; 200a), une troisième borne négative (200d ; 200b), et une quatrième borne positive (200f ; 200e) reliée à ladite seconde borne positive (200e ; 200f) dudit module d'éclairage (20' ; 20").

7. Le système d'éclairage selon la revendication 6, dans lequel :
- ledit convertisseur électronique (10) délivre une tension régulée (*Vₒᵤₜ*), ladite troisième borne positive (200c ; 200a) étant reliée à ladite première borne positive (200a ; 200c) dudit module d'éclairage (20' ; 20"), ladite troisième borne négative (200d ; 200b) étant reliée à ladite première borne négative (200b ; 200d) dudit module d'éclairage (20' ; 20"), et ledit module d'éclairage (20') comprenant au moins une chaîne de LED (22) reliée entre ladite première borne positive (200a ; 200c) et ladite première borne négative (200b ; 200d) dudit module d'éclairage (20') ; ou
- ledit convertisseur électronique (10') délivre un courant régulé (*iₒᵤₜ*), et ledit module d'éclairage (20') comprend au moins une chaîne de LED (22) reliée entre ladite première borne positive (200a ; 200c) et ladite troisième borne positive (200c ; 200a) dudit module d'éclairage (20').

8. Le système d'éclairage selon la revendication 7, dans lequel chaque chaîne de LED (22) possède des moyens associés (24) configurés pour réguler le courant traversant la chaîne de LED respective (22), ledit circuit de traitement (26) étant configuré pour contrôler le fonctionnement desdits moyens (24) configurés pour réguler le courant traversant la chaîne de LED respective (22).

9. Le système d'éclairage selon l'une des revendications précédentes, dans lequel :
- ladite première borne positive (400a ; 400c) et ladite première borne négative (400b ; 400d) dudit dispositif (40) sont reliées à ladite borne positive (100a) et à ladite borne négative (100b) dudit convertisseur électronique (10 ; 10'), respectivement,
- ladite seconde borne positive (400c ; 400a) et ladite seconde borne négative (400d ; 400b) dudit dispositif (40) sont reliées à ladite première borne positive (200a ; 200c) et à ladite première borne négative (200b ; 200d) dudit module d'éclairage (20' ; 20"), respectivement, et
- ladite troisième borne positive (400e) dudit dispositif (40) est reliée à ladite seconde borne positive (200e ; 200f) dudit module d'éclairage (20' ; 20").

10. Le système d'éclairage selon l'une des revendications 6 à 8 précédentes, dans lequel :
- ladite première borne positive (200a ; 200c) et ladite première borne négative (200b ; 200d) dudit module d'éclairage (20') sont reliées à ladite borne positive (100a) et à ladite borne négative (100b) dudit convertisseur électronique (10), respectivement,
- ladite seconde borne positive (400c ; 400a) et ladite seconde borne négative (400d ; 400b) dudit dispositif (40) sont reliées à ladite troisième borne positive (200c ; 200a) et à ladite troisième borne négative (200d ; 200b) dudit module d'éclairage (20'), respectivement, et
- ladite troisième borne positive (400e) dudit dispositif (40) est reliée à ladite quatrième borne positive (200f ; 200e) dudit module d'éclairage (20').

11. Le système d'éclairage selon l'une des revendications précédentes, dans lequel les bornes (100a, 100b) dudit convertisseur électronique (10 ; 10'), les bornes (200a, 200b, 200c, 200d, 200e, 200f) dudit module d'éclairage (20 ; 20') et les bornes (400a, 400b, 400c, 400d, 400e) dudit dispositif (40) sont réalisées avec des moyens de connexion rapide, tels que des blocs de bornes du type à visser ou à ressort, de sorte que ledit convertisseur électronique (10 ; 10'), ledit module d'éclairage (20' ; 20") et ledit dispositif (40) puissent être reliés les uns aux autres au moyen de câbles (50, 52, 54).

12. Le système d'éclairage selon l'une des revendications précédentes, dans lequel un premier câble (52 ; 54) est soudé à ladite seconde borne positive (400c), à ladite seconde borne négative (400d) et à ladite troisième borne positive (400e) dudit dispositif (40), et/ou un second câble (50) est soudé à ladite première borne positive (400a) et à ladite première borne négative (400b).

13. Le système d'éclairage selon l'une des revendications précédentes, dans lequel ladite seconde borne positive (400c), ladite seconde borne négative (400d) et ladite troisième borne positive (400e) dudit dispositif (40) et ladite première borne positive (200a ; 200c), ladite première borne négative (200b ; 200d) et ladite seconde borne positive (200e ; 200f) dudit module d'éclairage (20' ; 20") sont configurées pour former un connecteur, qui permet d'établir une liaison directe de ladite seconde borne positive (400c), ladite seconde borne négative (400d) et ladite troisième borne positive (400e) dudit dispositif (40), à ladite première borne positive (200a ; 200c), ladite première borne négative (200b ; 200d) et ladite seconde borne positive (200e ; 200f) dudit module d'éclairage (20' ; 20"), respectivement.
